# EUROPÄISCHE PATENTSCHRIFT

(11) **EP 1 293 695 B1**
(45) Veröffentlichungstag und Bekanntmachung des Hinweises auf die Patenterteilung: **16.11.2005**
(21) Anmeldenummer: 02017877.8
(22) Anmeldetag: 09.08.2002
(51) Int. Cl.: F16D 23/04, F16D 23/06

(54) **Formschlüssige Schaltkupplung und automatisierter Antriebsstrang**
Positive clutch and automated transmission
Embrayage à liason positive et transmission robotisée

(30) Priorität: 13.09.2001 DE 10146198
(43) Veröffentlichungstag der Anmeldung: 19.03.2003
(73) Patentinhaber: GETRAG Getriebe- und Zahnradfabrik Hermann Hagenmeyer GmbH & Cie KG, 74199 Untergruppenbach (DE)
(72) Erfinder: Rühle, Günter, 74369 Löchgau (DE); Stocker, Wilhelm, 71720 Oberstenfeld (DE); Schaarschmidt, Reinhard, 75428 Illingen (DE); Groeger, Oliver, 71711 Murr (DE)
(74) Vertreter: Steil, Christian

(56) Entgegenhaltungen:
- EP-A- 0 756 098
- BE-A- 462 386
- US-A- 4 817 773
- US-A- 5 022 506
- US-A- 5 113 986
- US-A- 5 845 754
- US-B1- 6 267 215

## Beschreibung

Die vorliegende Erfindung betrifft eine formschlüssige Schaltkupplung zum Drehkuppeln von zwei gegeneinander verdrehbaren Elementen, die jeweils eine Verzahnung aufweisen, insbesondere zum Kuppeln eines Losrades und einer Welle eines Stufengetriebes für ein Kraftfahrzeug, mit (i) einer zwischen den Elementen wirkenden Reibeinrichtung, die bei axialer Belastung dazu dient, die Drehzahlen der Elemente aneinander anzugleichen, mit (ii) einem Schaltglied, das zum Drehkuppeln der Elemente axial verschoben wird, dabei die Reibeinrichtung axial belastet und schließlich bei weiterem Verschieben den Formschluß zwischen den Verzahnungen der Elemente bewirkt, und mit (iii) Federmitteln, die so wirken, daß das weitere Verschieben erst dann möglich ist, wenn eine auf das Schaltglied wirkende axiale Kraft eine bestimmte Durchschaltschwelle überschreitet.

Ferner betrifft die vorliegende Erfindung einen automatisierten Antriebsstrang mit einem Motor, einer mit dem Ausgang des Motors verbundenen Anfahr- und Trennkupplung, einem mit dem Ausgang der Trennkupplung verbundenen formschlüssigen Stufengetriebe und einer Steuervorrichtung, wobei das Stufengetriebe eine Mehrzahl von Radsätzen entsprechend einer Mehrzahl von Gängen aufweist, die unter Steuerung der Steuervorrichtung mittels jeweiliger Schaltkupplungen ein- und auslegbar sind, wobei wenigstens ein Gangwechsel von einem Startgang zu einem Zielgang mittels einer teillastschaltfähigen Schaltkupplung für den Zielgang erfolgt, die bei wenigstens teilweise geschlossener Trennkupplung während des Gangwechsels ein Drehmoment zum Ausgang des Stufengetriebes überträgt.

Eine derart formschlüssige Schaltkupplung, die sperrverzahnungsfrei ist, und ein solcher automatisierter Antriebsstrang sind bekannt aus der DE 199 30 972 C1.

Diese Druckschrift offenbart ein teillastschaltfähiges formschlüssiges Stirnradgetriebe.

Bei den automatisierten Antriebssträngen für Kraftfahrzeuge unterscheidet man klassischerweise zwischen sogenannten Automaten mit hydrodynamischem Wandler und Planetenradsätzen und den automatisierten Stirnradgetrieben. Letztere weisen entweder eine einzelne Anfahr- und Trennkupplung auf, die dazu ausgelegt ist, den Motor, in der Regel einen Verbrennungsmotor, mit dem Getriebe zu verbinden. Bei den sogenannten Doppelkupplungsgetrieben weist das Getriebe zwei parallele Kraftübertragungszweige auf und entsprechend zwei überschneidend ansteuerbare Trennkupplungen.

Bei den automatisierten Handschaltgetrieben mit einer einzelnen Anfahr- und Trennkupplung entsteht bei einem Gangwechsel gewöhnlich ein Zugkrafteinbruch. Denn vor dem Auslegen des Startganges und dem anschließenden Einlegen des Zielganges wird gewöhnlich die Trennkupplung geöffnet und während der Öffnung der Trennkupplung wird kein Drehmoment von dem Motor auf die Antriebsräder übertragen.

Aus der DE 199 08 602 A1 ist ein derartiger automatisierter Antriebsstrang bekannt, bei dem die Schaltkupplungen so ausgelegt sind und die Steuereinrichtung Aktuatoren zum Betätigen der Schaltkupplungen so ansteuert, daß wenigstens ein Gangwechsel erfolgt, ohne die Trennkupplung vollständig zu öffnen.

Die hierzu verwendeten Schaltkupplungen sind Synchroneinheiten von an sich herkömmlichem Aufbau, wobei diese jedoch als Lastschaltelemente ausgebildet sind.

Synchroneinheiten weisen gewöhnlich eine Sperreinrichtung in Form einer Sperrverzahnung an einem Synchronring auf. Dabei bleibt bei einem Synchronisierungsvorgang das Reibmoment nur so lange aufrecht erhalten, wie ein Drehzahlunterschied zwischen Synchronring und Losrad vorhanden ist. Sobald die Drehzahlen der zwei Elemente (Welle und Losrad) aneinander angeglichen sind, fällt das Reibmoment auf Null ab und der Synchronring gibt dem Schaltglied (der Schaltmuffe) den Weg zum Durchschalten frei. Während der Durchschaltphase kann kein Drehmoment übertragen werden, da die Verzahnung der Schaltmuffe durch die Sperrverzahnung hindurch verschoben wird und keine Axiallast mehr auf diese aufbringen kann.

Aus der eingangs genannten DE 199 30 972 C1 ist eine weitere Schaltkupplung für einen teillastschaltfähigen Antriebsstrang bekannt. In einer Ausgestaltung weist die Schaltkupplung eine Reibungskupplung und eine formschlüssige Kupplung auf, die unabhängig voneinander ansteuerbar sind. In einer alternativen Ausgestaltung sind die Reibungskupplung und die formschlüssige Kupplung der Schaltkupplung miteinander gekoppelt und mittels eines einzelnen Aktuators so ansteuerbar, daß die Schaltkupplung unter Last betätigbar ist. Hierzu ist eine Koppeleinrichtung vorgesehen, die dafür sorgt, daß die Reibungskupplung der Schaltkupplung unter Last ein hinreichend großes Reibmoment aufbauen kann, um die Drehzahlen von Losrad und Welle aneinander anzugleichen, ohne daß die formschlüssige Kupplung betätigt wird. Dabei soll die Koppeleinrichtung Axialkräfte von mehr als 300 N zwischen Stellgliedern der Reibungskupplung und der formschlüssigen Kupplung aufnehmen. Hierdurch wird erreicht, daß die Reibungskupplung unter Last betätigbar ist, also mit Axialkräften beaufschlagbar ist, die 300 N betragen oder mehr. Im Vergleich hierzu wird bei einer herkömmlichen Sperrsynchronisierung bereits bei Axialkräften von mehr als 60 N durchgeschaltet, also der Formschluß hergestellt.

Im Betrieb erfolgt bei dieser bekannten Schaltkupplung ein Schaltvorgang durch Anlegen einer Axialkraft an eine Schaltmuffe. Dabei erfolgt zunächst eine Drehzahlangleichung mit einer Axialkraft bis zu einem Schwellenwert. Wenn eine Axialkraft an die Schaltmuffe angelegt wird, die den Schwellenwert übersteigt, wird der Formschluß hergestellt.

Zum Bilden der Axialkraftschwelle ist bei einer Ausführungsform eine radial ausgerichtete Druckeinheit vorgesehen, bei der eine Druckfeder so angeordnet ist, daß deren Federkraft radial zwischen einem Mitnehmerstein und der Schaltmuffe wirkt.

Vor diesem Hintergrund ist es die Aufgabe der vorliegenden Erfindung, eine verbesserte Schaltkupplung zum Drehkuppeln von zwei gegeneinander verdrehbaren Elementen sowie einen verbesserten automatisierten Antriebsstrang anzugeben.

Diese Aufgabe wird gemäß einem ersten Aspekt der vorliegenden Erfindung bei der eingangs genannten formschlüssigen Schaltkupplung dadurch gelöst, daß die Federmittel derart angeordnet sind, daß die Federkraft in Umfangsrichtung bzw. tangential wirkt, und daß Umlenkmittel vorgesehen sind, die die axiale Kraft in tangentiale Richtung gegen die Federkraft umlenken, so, daß die tangential wirkende Federkraft die Durchschaltschwelle bildet.

Gemäß einem zweiten Aspekt der vorliegenden Erfindung wird die obige Aufgabe bei der eingangs genannten formschlüssigen Schaltkupplung dadurch gelöst, daß die Federmittel derart angeordnet sind, daß die Federkraft in axialer Richtung wirkt, und daß Umlenkmittel vorgesehen sind, die die axiale Kraft zunächst in radiale Richtung und anschließend wieder in axiale Richtung gegen die Federkraft umlenken, so daß die axial wirkende Federkraft die Durchschaltschwelle bildet.

Bei dem eingangs genannten automatisierten Antriebsstrang wird die obige Aufgabe dadurch gelöst, daß eine formschlüssige Schaltkupplung gemäß dem ersten oder zweiten Aspekt der vorliegenden Erfindung als teillastschaltfähige Schaltkupplung verwendet wird.

Gegenüber dem Stand der Technik wird sowohl bei dem ersten Aspekt als auch bei dem zweiten Aspekt der Erfindung eine verbesserte Funktionalität erreicht. Ferner ist sowohl bei dem ersten als auch dem zweiten Aspekt der Erfindung der bauliche Raumbedarf in radialer Richtung deutlich verringert.

Bei einer besonders bevorzugten Ausführungsform weisen die Umlenkmittel wenigstens eine Rampe auf.

Eine Rampe ist eine konstruktiv vergleichsweise einfache Möglichkeit der Kraftumlenkung.

Bei dem ersten Aspekt der Erfindung ist es ferner bevorzugt, wenn das Schaltglied wenigstens einen Blockzahn aufweist, der an seiner axialen, in Durchschaltrichtung weisenden Stirnseite eine Rampe aufweist, die mit einem in Umfangsrichtung beweglichen Sperrelement zusammenwirkt.

Der Blockzahn an dem Schaltglied ist dabei ein von einer gegebenenfalls an dem Schaltglied vorgesehenen Verzahnung separates Element. Vorzugsweise sind um den Umfang des Schaltgliedes verteilt zwei bis vier derartiger Blockzähne und eine entsprechende Anzahl von Sperrelementen vorgesehen.

Von besonderem Vorteil ist es dabei, wenn das Sperrelement in axialer Richtung beweglich ist und dazu dient, die Reibeinrichtung axial zu belasten.

Dabei ist es besonders bevorzugt, wenn zwischen dem Sperrelement und der Reibeinrichtung ein umfänglich durchgehender Druckring vorgesehen ist.

Obgleich um den Umfang verteilt nur wenige Sperrelemente vorgesehen sind, wie oben erwähnt bspw. zwei bis vier, wird durch den umfänglich durchgehenden Druckring dennoch eine in axialer Richtung gleichmäßige Belastung der Reibeinrichtung erzielt.

Gemäß einer weiteren bevorzugten Ausführungsform ist das Sperrrelement mit einer Rampe versehen, die mit der Rampe des Blockzahnes zusammenwirkt.

Auf diese Weise ist es mit hoher mechanischer Verläßlichkeit möglich, eine axiale Bewegung des Schaltgliedes in eine Umfangsbewegung umzulenken.

Dabei ist es gleichfalls bevorzugt, wenn das Sperrelement bei axialer Belastung seiner Rampe die Federmittel in Umfangsrichtung elastisch komprimiert.

Auf diese Weise werden mittels des Sperrelementes und des Blockzahnes die Umlenkmittel zum Umlenken von auf das Schaltglied wirkenden Axialkräften realisiert.

Dabei ist es ferner von Vorzug, wenn die Federmittel einen in Umfangsrichtung beweglichen Federstein gegen einen Anschlag elastisch vorspannen.

Bei dieser Ausführungsform ist es bevorzugt, wenn das Sperrelement seine Umfangsbewegungen auf den Federstein überträgt. Durch den Anschlag ist eine definierte Ausgangslage des Federsteins in der Ruheposition möglich.

Ferner ist es bevorzugt, wenn die Anlagefläche zwischen dem Sperrelement und dem Federstein schräg zur Umfangsrichtung ausgerichtet ist, so, daß dem Sperrelement mittels des Federsteins eine Axialkraft erteilt wird, um die axiale Belastung der Reibeinrichtung zu verstärken.

Auf diese Weise ist es möglich, mit einer relativ geringen axialen Kraft auf das Schaltglied relativ hohe Axialkräfte auf die Reibeinrichtung zu erzielen. Ferner ermöglicht die schräge Ausrichtung der Anlagefläche, daß die Reibeinrichtung auch während der Phase des Durchschaltens belastet wird und folglich ein Drehmoment übertragen kann.

Bei dem zweiten Aspekt der vorliegenden Erfindung ist es bevorzugt, wenn die Umlenkmittel einen Wälzkörper, der zwischen dem Schaltglied, einer axial unbeweglichen Rampe und den Federmitteln angeordnet ist.

Durch diese Anordnung werden die Umlenkmittel auf konstruktiv einfache Weise mittels eines Wälzkörpers, bspw. einer Kugel oder einer Rolle, realisiert.

Es versteht sich, daß um den Umfang der Schaltkupplung herum eine Anzahl von etwa zwei bis zehn derartige Wälzkörper angeordnet sind.

Insofern ist es von besonderem Vorzug, wenn zwischen dem Wälzkörper (bzw. den Wälzkörpern) und den Federmitteln eine in Umfangsrichtung durchgehende Scheibe angeordnet ist.

Auf diese Weise können über den Wälzkörper übertragene Kräfte gleichmäßig auf die Federmittel übertragen werden.

Gemäß einer weiteren bevorzugten Ausführungsform weist das Schaltglied eine Ausnehmung auf, in die der Wälzkörper im axial nicht durchgeschalteten Zustand des Schaltgliedes greift.

Dabei wird der Wälzkörper mittels der Federmittel in die Ausnehmung gedrückt. Beim Aufbringen einer Axialkraft in Schaltrichtung auf das Schaltglied werden folglich über den Wälzkörper die Federmittel ausgelenkt und können derart die Durchschaltschwelle bilden.

Dabei ist es besonders bevorzugt, wenn die Ausnehmung des Schaltgliedes eine Rampe aufweist.

Bei einer sowohl auf den ersten als auch auf den zweiten Aspekt der vorliegenden Erfindung anwendbaren bevorzugten Ausführungsform richten die Umlenkmittel eine Kraftübersetzung ein, so daß eine kleine axiale Kraft auf das Schaltglied eine höhere axiale Belastung der Reibeinrichtung bewirkt.

Bei dem ersten Aspekt der vorliegenden Erfindung wird dies dann erreicht, wenn die Anlagefläche zwischen dem Sperrelement und dem Federstein schräg zur Umfangsrichtung ausgerichtet ist. Bei dem zweiten Aspekt der vorliegenden Erfindung wird dies durch eine geeignete Wahl der Steigungen der axial unbeweglichen Rampe und der Steigung einer Rampe an dem Schaltglied erzielt.

Gemäß einer weiteren, insgesamt bevorzugten Ausführungsform ist die Schaltkupplung sperrverzahnungsfrei ausgebildet.

Durch diese Maßnahme wird erreicht, daß, im Gegensatz zu herkömmlichen Synchroneinheiten, die Möglichkeit besteht, auch während der Durchschaltphase eine Drehmoment zu übertragen, wie es nachstehend noch im Detail ausgeführt werden wird. Ferner können die Durchschaltzeiten kurz gehalten werden.

Gemäß einer weiteren bevorzugten Ausführungsform ist die Schaltkupplung dazu ausgelegt, bei einem axialen Verschieben des Schaltgliedes ein an einem der Elemente anstehendes Drehmoment auf das andere so lange zu übertragen, bis der Formschluß erreicht ist.

Bei dem zweiten Aspekt der vorliegenden Erfindung ist diese Auslegung der Schaltkupplung der Regelfall. Die Reibeinrichtung bleibt auch während der Durchschaltphase belastet und kann folglich ein Drehmoment übertragen. Hierdurch kann auch während des Durchschaltens eine vergleichsweise hohe Zugkraft des Antriebsstranges beibehalten werden.

Ferner kann relativ geräuscharm geschaltet werden.

Auch bei dem ersten Aspekt der Erfindung läßt sich eine derartige Auslegung der Schaltkupplung erzielen, bspw. durch eine geeignete Wahl der axialen Abmessungen der Verzahnung des Schaltgliedes einerseits und des Blockzahnes des Schaltgliedes andererseits.

Gemäß einer weiteren bevorzugten Ausführungsform sind die Verzahnungen der Elemente dazu ausgelegt, ein Einfädeln unter Teillast zu erleichtern.

Diese Ausführungsform ist insbesondere dann von Vorzug, wenn die Schaltkupplung dazu ausgelegt ist, bei einem axialen Verschieben des Schaltgliedes ein an einem der Elemente anstehendes Drehmoment auf das andere zu übertragen, bis annähernd der Formschluß erreicht ist, so daß der Formschluß im Freiflug erreicht wird.

Bei dieser Auslegung der Schaltkupplung wird die Reibeinrichtung entlastet, kurz bevor der Formschluß erreicht ist, so daß in der Regel bei einer geringen Drehzahldifferenz durchgeschaltet wird. Folglich ist diese Auslegung der Schaltkupplung mit etwas mehr Geräuschen beim Schalten verbunden. Andererseits ist das Schalten im Stillstand deutlich leichter als bei einer Auslegung der Schaltkupplung, bei der bis zum Formschluß die Reibkupplung belastet wird.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines automatisierten Antriebsstranges gemäß einer Ausführungsform der vorliegenden Erfindung;
- Fig. 2: eine Axialschnittansicht einer Schaltkupplung gemäß einem ersten Aspekt der vorliegenden Erfindung;
- Fig. 3: eine schematische perspektivische, teilweise weggeschnittene Ansicht der Schaltkupplung der Fig. 2;
- Fig. 4: eine schematische Darstellung zum Erläutern eines Schaltvorganges mit der Schaltkupplung der Figuren 2 und 3;
- Fig. 5: ein Diagramm des Schaltmuffenweges für den Zielgang und den Startgang über der Zeit bei einem Schaltvorgang mit Freiflugphase mit der Schaltkupplung der Figuren 2 bis 4;
- Fig. 6: ein Diagramm der Differenzdrehzahl, des Abtriebsmomentes sowie des Kupplungsmomentes über der Zeit bei einem Schaltvorgang mit Freiflugphase;
- Fig. 7: eine der Fig. 4 ähnliche Darstellung einer abgewandelten Ausführungsform der Schaltkupplung der Figuren 2 und 3;
- Fig. 8: eine Axialschnittansicht einer Schaltkupplung gemäß einem zweiten Aspekt der vorliegenden Erfindung; und
- Fig. 9: eine Detailansicht im Schnitt der Schaltkupplung der Fig. 8.

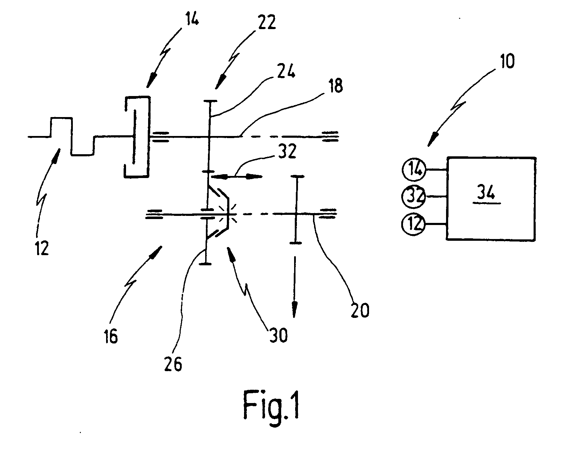

In Fig. 1 ist eine schematische Ansicht eines automatisierten Antriebsstranges gezeigt, der generell mit 10 bezeichnet ist.

Der Antriebsstrang 10 beinhaltet einen Motor 12, gewöhnlich einen Verbrennungsmotor, eine mit dem Ausgang des Motors 12 verbundene einzelne Anfahr- und Trennkupplung 14 sowie ein mit dem Ausgang der Trennkupplung 14 verbundenes Stufengetriebe 16.

Das Stufengetriebe 16 ist als Stirnradgetriebe ausgebildet und weist eine Eingangswelle 18 auf, die mit dem Ausgang der Trennkupplung 14 verbunden ist, sowie eine Ausgangswelle 20.

Das Stufengetriebe 16 beinhaltet ferner eine Mehrzahl von Radsätzen 22 (von denen der Übersicht halber in Fig. 1 nur einer dargestellt ist) entsprechend einer Mehrzahl von Vorwärtsgängen und gewöhnlich einem Rückwärtsgang.

Jeder Radsatz beinhaltet ein Festrad 24, das im dargestellten Fall an der Eingangwelle 18 festgelegt ist, sowie ein Losrad 26, das im dargestellten Fall an der Ausgangswelle drehbar gelagert ist.

Zum Einlegen eines Ganges wird das Losrad 26 des jeweiligen Radsatzes 22 mit der Welle 20 verbunden, an der es drehbar gelagert ist. Hierzu ist eine Schaltkupplung 30 vorgesehen, die in Fig. 1 schematisch angedeutet ist.

Die Schaltkupplung 30 ist mittels einer ebenfalls nur schematisch angedeuteten Aktuatorik 32 betätigbar.

Ferner umfaßt der Antriebsstrang 10 eine Steuervorrichtung 34. Die Steuervorrichtung 34 steuert den Betrieb der Anfahr- und Trennkupplung sowie die Aktuatorik 32 des Stufengetriebes 16 und gegebenenfalls auch den Motor 12.

Die Steuervorrichtung 34 kann dazu ausgelegt sein, Gangwechsel vollautomatisch oder auf Anforderung durch einen Fahrer (bspw. per Schaltwippen oder ähnliches) durchzuführen.

Es versteht sich, daß die Schaltkupplungen 30 von benachbarten Losrädern 26 häufig miteinander in eine Schaltkupplungseinheit kombiniert werden, obgleich dies in Fig. 1 nicht näher dargestellt ist.

Ferner zeigt Fig. 1 die typische Anordnung eines Antriebsstranges für den Front-Quereinbau im Kraftfahrzeug. Es versteht sich, daß ein automatisierter Antriebsstrang gemäß der vorliegenden Erfindung auch für den Längseinbau ausgelegt sein kann.

Ferner sind, obgleich dies in Fig. 1 nicht dargestellt ist, die Radsätze 22 derart angeordnet, daß vermieden ist, daß eine kombinierte Schaltkupplungseinheit benachbarte Gänge bedient. Dies bedeutet, daß ein Gangwechsel von einem Startgang zu einem unmittelbar darauffolgenden Zielgang (z.B. vom zweiten in den dritten Gang) erfolgt, indem eine Schaltkupplung 30 für den Startgang überschneidend mit einer baulich getrennten Schaltkupplung 30 für den Zielgang betätigt werden kann, um die Gangwechsel zeitlich möglichst effizient und folglich mit möglichst geringem Zugkrafteinbruch durchführen zu können.

Wenigstens einige der Schaltkupplungen 30 des Stufengetriebes 16 sind als teillastschaltfähige Schaltkupplungen 30 ausgebildet.

Folglich ist es möglich, den Antriebsstrang 10 bei einem Gangwechsel so zu betreiben, daß die Anfahr- und Trennkupplung 14 nicht vollständig geöffnet wird. Folglich steht am Getriebeeingang während der gesamten Dauer eines solchen Gangwechsels ein Drehmoment an. Die teillastschaltfähige Schaltkupplung des Zielganges ist bei noch eingelegtem Startgang dazu in der Lage, das getriebeeingangsseitige Drehmoment zu übernehmen und während des gesamten Gangwechsels wenigstens teilweise zu halten. Dies ermöglicht, daß Gangwechsel unter Teillast erfolgen können, folglich keine Unterbrechung der Zugkraft eintritt. Wegen Details dieses Antriebsstrangkonzeptes wird verwiesen auf die DE 199 08 602 A1 sowie auf die DE 199 30 972, auf deren Offenbarungsgehalt hiermit vollständig Bezug genommen wird.

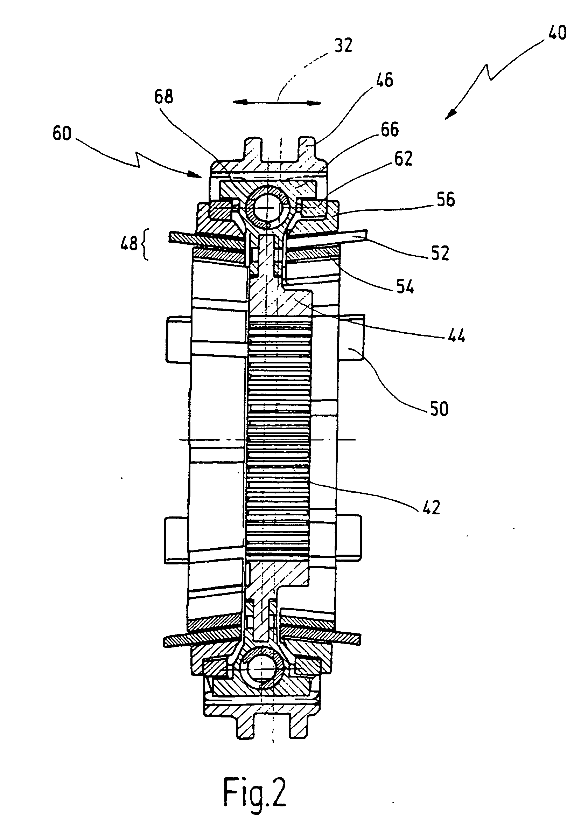

In Fig. 2 ist eine Ausführungsform einer teillastschaltfähigen Schaltkupplung 40 im Axialschnitt dargestellt.

Die Schaltkupplung 40 ist Teil einer Schaltkupplungseinheit (nicht näher bezeichnet), die dazu ausgelegt ist, zwei benachbarte Losräder (nicht dargestellt) wahlweise mit einer Welle 42 drehfest zu koppeln oder hiervon zu lösen.

An der Welle 42 ist eine Führungsmuffe 44 axial unverschieblich und drehfest festgelegt.

An der Führungsmuffe 44 ist eine Schaltmuffe 46 drehfest, jedoch axial verschieblich gelagert. Folglich kann die Schaltmuffe 46 mittels einer Schaltgabel (nicht gezeigt) axial verschiebbar sein, die von einer nicht näher bezeichneten Aktuatorik 32 betätigbar ist.

Die Schaltkupplung 40 beinhaltet ferner eine Reibeinrichtung 48 in Form eines Mehrfachkonuspaketes mit einem äußeren Konusring 52 und einem inneren Konusring 54.

Der äußere Konusring 52 ist mit einer Mehrzahl von Nasen 50 versehen, die in Drehrichtung formschlüssig mit einem Kupplungskörper (nicht dargestellt) verbunden sind, der drehfest mit dem jeweiligen Losrad verbunden ist.

Radial außen ist an der Reibeinrichtung 48 ein Druckring 56 vorgesehen, und der Druckring 56 ist als Konusring ausgebildet und dazu ausgelegt, die Reibeinrichtung 48 zu belasten, wenn auf ihn eine Axialkraft ausgeübt wird.

Die Schaltkupplung 40 beinhaltet ferner Umlenkmittel 60, die dazu ausgelegt sind, eine in axialer Richtung auf die Schaltmuffe 46 ausgeübte Kraft in Umfangs- bzw. tangentiale Richtung umzulenken.

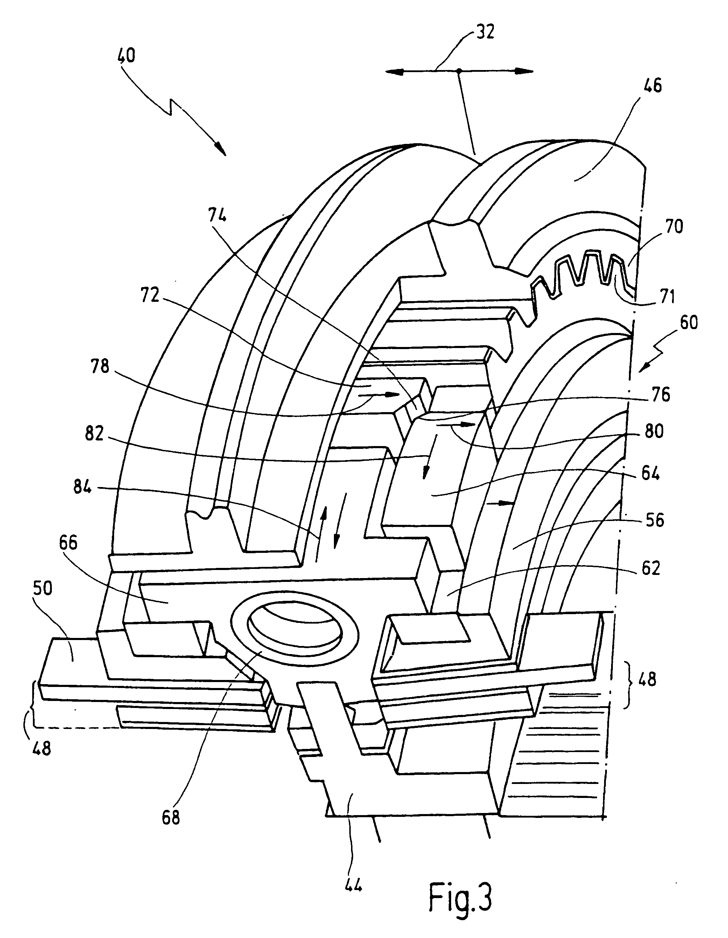

Zu diesem Zweck weisen die Umlenkmittel 60, wie es auch in Fig. 3 gezeigt ist, einen Sperring 62 auf, an dem eine Mehrzahl von Sperrzähnen 64 vorgesehen sind.

Die Zahl der Sperrzähne 64 kann bspw. zwischen drei und sechs liegen und beträgt vorzugsweise drei.

Die Sperrzähne 64 erstrecken sich jeweils in radialer Richtung ausgehend von dem Sperring 62 und sind in Umfangs- bzw. tangentialer Richtung (im folgenden lediglich mit Umfangsrichtung bezeichnet) benachbart zu einem jeweiligen Federstein 66.

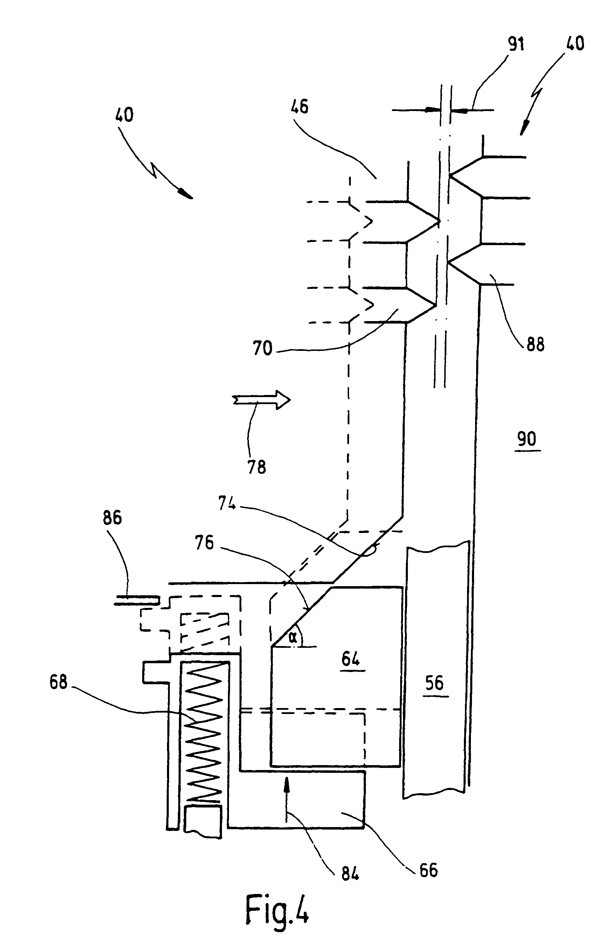

Der Sperring 62 ist insgesamt in Umfangsrichtung begrenzt beweglich gelagert und liegt mit einer axialen Außenseite an dem Druckring 56 an. Der Federstein 66 nimmt wenigstens einen Teil einer Druckfeder 68 auf, die in Umfangsrichtung angeordnet ist und den Federstein 66 in Umfangsrichtung gegen einen in Fig. 2 und 3 nicht dargestellten Anschlag 86 (siehe Fig. 4) vorspannt.

Die Schaltmuffe 46 weist eine Innenverzahnung 70 auf, die mit einer Außenverzahnung 71 der Führungsmuffe 44 kämmt. Die Innenverzahnung 70 ist ferner dazu ausgelegt, in Eingriff zu treten mit einer Außenverzahnung 88 eines Kupplungskörpers 90 (Fig. 4), um ein drehfest damit verbundenes Losrad drehfest mit der Welle 42 zu kuppeln.

An dem Innenumfang der Schaltmuffe 46 ist ferner eine Mehrzahl von Blockzähnen 72 vorgesehen, deren Anzahl der Anzahl der Sperrzähne 64 entspricht.

Jeder Blockzahn 72 weist an seinem axial vorderen Ende eine Rampe 74 auf, die einer Rampe 76 an dem jeweiligen Sperrzahn 64 zugeordnet ist.

Die Anordnung der Rampen 74, 76 ist derart, daß eine auf die Schaltmuffe 46 ausgeübte Axialkraft 78 aufgeteilt wird in eine axiale Reibkraft 80 und eine Spannkraft 82, die in Umfangsrichtung verläuft.

Die Spannkraft 82 wirkt einer Federkraft 84 entgegen, mit der die Druckfeder 68 den Federstein 66 gegen den Anschlag 86 vorspannt.

Fig. 4 zeigt eine schematische Abwicklung der Schaltkupplung 40 zur Erläuterung eines Schaltvorganges.

Eine der den Figuren 2 und 3 entsprechende Ausgangsposition der Schaltmuffe 46 ist in Fig. 4 gestrichelt dargestellt.

In dieser Position liegt die Rampe 74 des Blockzahnes gegenüber der Rampe 76 des Sperrzahnes.

Eine Axialkraft 78 führt zunächst dazu, daß die Rampe 74 auf die Rampe 76 aufläuft und der Sperrzahn 64 gegen einen Außenbund des Druckringes 56 angedrückt wird.

Die anfangs von der Aktuatorik 32 aufgebrachte Axialkraft 78 liegt dabei unterhalb eines Schwellenwertes, so daß die von dem Sperrzahn 64 in Umfangsrichtung auf den Federstein 66 ausgeübte Kraft kleiner ist als die Federkraft 84. Folglich wird die Axialkraft 78 im wesentlichen in eine Reibkraft 80 umgesetzt, mit der der Druckring 56 die Reibeinrichtung 48 belastet. Durch die Belastung der Reibeinrichtung 48 werden die Drehzahlen der Welle 42 und des Losrades (einschließlich des zugehörigen Kupplungskörpers 90, Fig. 4) aneinander angepaßt.

Sobald die auf den Sperrzahn 64 wirkende Spannkraft 82 die Federkraft 84 übersteigt, bspw. durch Erhöhen der Axialkraft 78, wird die Druckfeder 68 komprimiert, indem der Sperrzahn 64 in Umfangsrichtung ausweicht.

In Fig. 4 ist in durchgezogenen Linien eine Situation gezeigt, bei der die Rampe 74 die Rampe 76 soeben vollkommen überfahren hat. Zu diesem Zeitpunkt stehen sich die Verzahnungen 70, 88 der Schaltmuffe 46 bzw. des Kupplungskörpers 90 um einen sogenannten Freiflugweg 91 beabstandet gegenüber.

Ab diesem Zeitpunkt ist die Druckfeder 68 maximal komprimiert und der Blockzahn 72 fährt axial an dem Sperrzahn 64 vorbei, ohne noch auf den Sperrzahn 64 eine Axialkraft auszuüben. Folglich wird auch keine Axialkraft auf den Druckring 56 ausgeübt und die Reibeinrichtung 48 wird nicht belastet.

Aufgrund der Tatsache, daß die Reibeinrichtung 48 entlastet wird und eingangsseitig aufgrund der nicht vollständig geöffneten Trennkupplung 14 weiterhin ein Drehmoment getriebeeingangsseitig ansteht, werden die Differenzdrehzahlen zwischen Welle 42 und Kupplungskörper 90 unmittelbar wieder ansteigen. Da der Freiflugweg 91 jedoch sehr kurz ist, fädeln die Verzahnungen 70, 88 zeitlich kurz hiernach ein und stellen den Formschluß her.

Aufgrund dieser Dimensionierung der Schaltkupplung 40 läßt sich diese auch im Stillstand vergleichsweise einfach schalten, da ein häufig bis zu einem halben Zahnabstand notwendiges Verdrehen der Verzahnungen 70, 88 gegeneinander im unbelasteten Zustand erfolgt, also ohne daß gegen ein Reibmoment der Reibeinrichtung 48 gearbeitet werden müßte.

Aufgrund des kurzfristigen Ansteigens der Differenzdrehzahl zwischen Welle 42 und Losrad versteht sich, daß die Verzahnungen 70, 88 für ein Einlegen bei Differenzdrehzahlen ausgelegt sind, bspw. durch eine asymmetrische Anspitzung.

Ferner kann, je nach erfolgter Differenzdrehzahl, ein gewisses Schaltgeräusch entstehen.

Aus Fig. 4 ist erkennbar, daß bei der gewählten Grundkonzeption der Freiflugweg 91 relativ beliebig einstellbar ist. Dieser hängt im wesentlichen von der relativen axialen Anordnung der Verzahnung 70 und des Blockzahnes 72 ab. Folglich ist es mit der gleichen Grundkonstruktion auch möglich, den Formschluß mit belasteter Reibeinrichtung 48 durchzuführen. Hierbei müßte der Freiflugweg 91 negativ sein. Mit anderen Worten müßten die Verzahnungen 70, 88 bereits ineinandergreifen während die Rampen 74, 76 noch aneinander anliegen, also weiterhin eine Axialkraft über den Sperrzahn 64 auf den Druckring 56 und damit die Reibeinrichtung 48 ausgeübt wird.

Eine derartige Auslegung der Schaltkupplung 40 ist allein durch Austausch der Schaltmuffe 46 möglich. Zusätzlich kann auch die Federrate der Druckfeder 68 angepaßt werden.

Folglich ist es bei einer solchen Auslegung der Schaltkupplung möglich, einen Formschluß unter Last herzustellen, wobei der negative Freiflugweg 91 und die Federrate 68 so aneinander angepaßt werden müssen, das gewährleistet ist, daß die Differenzdrehzahlen zwischen Welle 42 und Losrad auf Null oder auf einen sehr kleinen Wert abgesunken ist, bevor die Verzahnung 70 in die Verzahnung 88 eingreift.

Bei einer dritten Auslegungsvariante ist der Freiflugweg 91 Null, d.h. das Einfädeln der Verzahnungen 70, 88 ineinander findet genau dann statt, wenn die Rampe 74 die Rampe 76 überfahren hat.

Auch in diesem Fall ist ein Wiederanstieg der Differenzdrehzahl im wesentlichen ausgeschlossen.

Die Auslegung der Schaltkupplung 40 derart, daß ein Formschluß unter Last hergestellt wird, führt einerseits zu einer generell geringeren Geräuschentwicklung. Andererseits ist das Schalten im Stillstand deutlich erschwert, da die Verzahnungen 70, 88 ggf. unter voller Belastung der Reibeinrichtung 48 gegeneinander verdreht werden müssen.

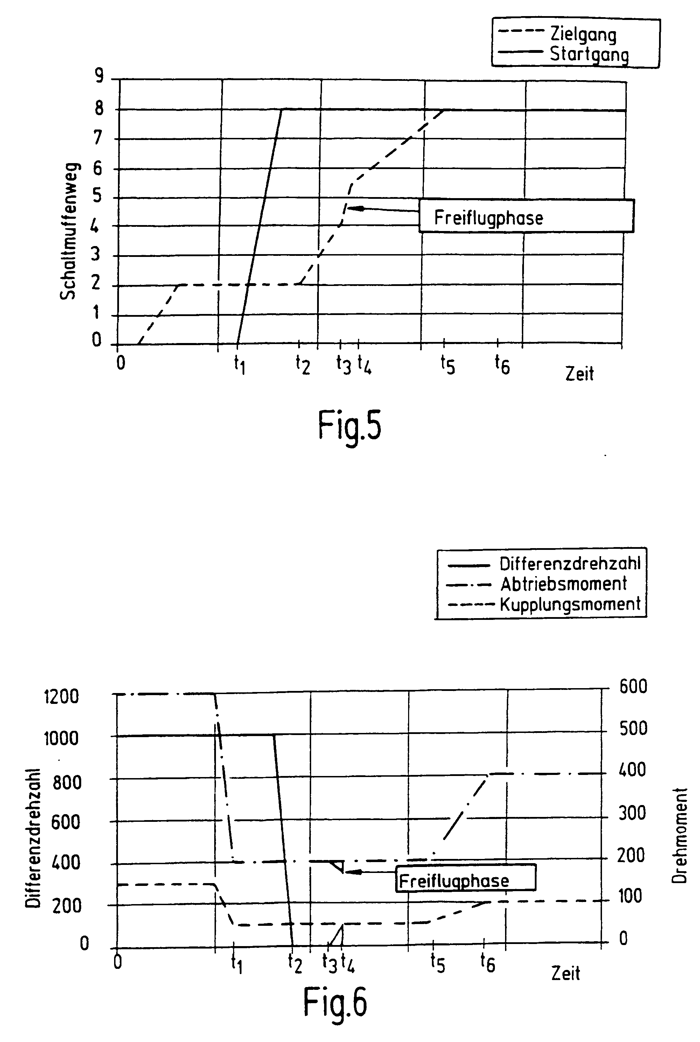

Die Figuren 5 und 6 zeigen in schematischer Form Diagramme von Schaltmuffenweg, Differenzdrehzahl und Drehmoment über der Zeit bei einem Schaltvorgang mittels der Schaltkupplung 40 in qualitativer Hinsicht.

Dabei ist die Schaltkupplung 40 mit einem positiven Freiflugweg 91 ausgelegt, ähnlich der Darstellung der Fig. 4.

In den Diagrammen der Figuren 5 und 6 ist die Zeit in Millisekunden angegeben, der Schaltmuffenweg in Millimetern, das Drehmoment in Nm und die Differenzdrehzahl in Umdrehungen pro Minute. Es versteht sich, daß diese Maßeinheiten lediglich beispielhaft sind und je nach Konstruktion, Gangstufe und vor allem je nach Schaltart (sportlich, komfortabel, etc.) sehr stark variieren können.

Man erkennt aus Fig. 5, daß vor einem Auslegen des Startganges die Schaltkupplung 40 des Zielganges betätigt wird, um das getriebeeingangsseitig anstehende Drehmoment zu übernehmen.

Etwa zum Zeitpunkt t₁ wird das getriebeeingangsseitig anstehende Drehmoment heruntergeregelt, bspw. durch Eingriff in die Steuerung des Motors 12 oder durch teilweises Öffnen der Trennkupplung 14. Gleichzeitig fällt auch das von der Schaltkupplung 40 des Zielganges übernommene Kupplungsmoment entsprechend ab.

Anschließend wird der Startgang ausgelegt und es erfolgt eine Angleichung der Drehzahlen von Welle und Losrad für den Zielgang. Etwa zum Zeitpunkt t₂ ist die Differenzdrehzahl Null. Anschließend wird die Axialkraft erhöht, so daß die Druckfeder 68 allmählich komprimiert wird. Bei t₃ wird der Sperrzahn 64 überfahren. Dieser Zustand entspricht der Darstellung der Fig. 4. Zur Überbrückung des Freiflugweges 91 ist eine kurze Zeit notwendig, innerhalb der die Differenzdrehzahl wieder leicht ansteigt. Ab etwa t₄ sind die Verzahnungen 70, 88 ineinander eingefädelt und ab etwa t₅ hat die Schaltmuffe 46 ihren Anschlag erreicht, der Formschluß ist vollständig hergestellt.

Hiernach oder kurz zuvor wird das getriebeeingangsseitig anstehende Drehmoment wieder erhöht, also der Verbrennungsmotor wieder entsprechend angesteuert und/oder die Trennkupplung 14 wieder geschlossen.

Ab etwa t₆ ist der Schaltvorgang insgesamt abgeschlossen.

Es ist anzumerken, daß der dargestellte Schaltvorgang ein Hochschalten darstellt, also das Abtriebsmoment des Startganges höher ist als das Abtriebsmoment des Zielganges.

Aus dem oben stehenden ergibt sich, daß die zum Durchschalten erforderliche Axialkraft 78 vorteilhafterweise unabhängig von dem übertragenen Kupplungsmoment ist. Das Reibmoment selbst und die Dauer des Reibmomentes können über die Anpreßkraft (Axialkraft), die Anpreßzeit, den Winkel α der Gleitflächen der Rampen 74, 76, die Länge der Rampen 74, 76 und/oder die Federrate der Druckfeder 68 eingestellt werden.

Es versteht sich, daß auch Ausführungsformen ohne Federstein 66 denkbar sind, bei denen der Sperrzahn 64 unmittelbar auf eine Druckfeder wirkt. Ferner kann die Druckfeder 68 auch eine Spiralfeder, eine Blattfeder, eine Gasfeder oder ähnliches sein, bspw. federnde Blechringe.

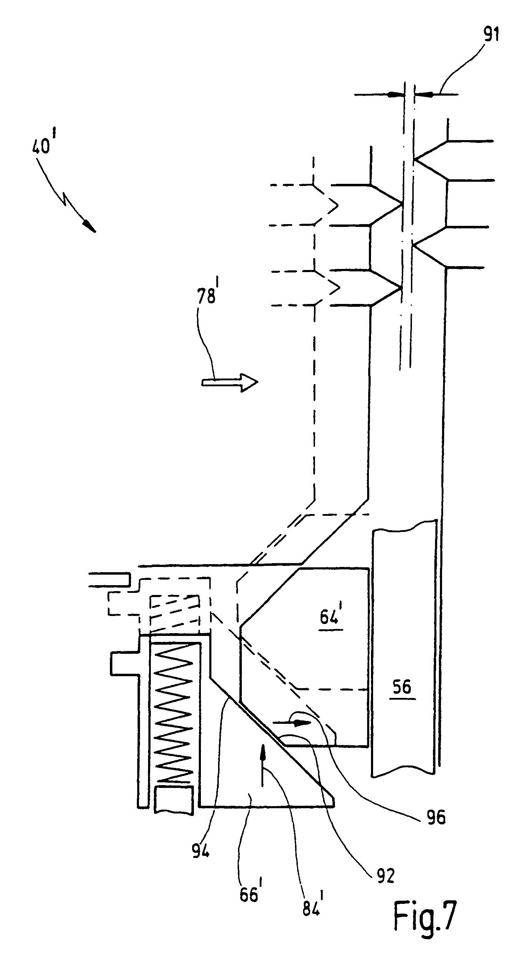

Fig. 7 zeigt eine Modifikation der Schaltkupplung 40, die dort generell mit 40' bezeichnet ist.

Im Unterschied zu der Schaltkupplung 40 liegt der Sperrzahn 64' nicht senkrecht an dem Federstein 66 an. Vielmehr sind an dem Sperrzahn 64' eine Rampe 92 und an dem Federstein 66' eine Rampe 94 vorgesehen, die einander gegenüber liegen.

Diese Rampen 92, 94 (die man auch als Gleitschrägen bezeichnen kann) bewirken folgendes. Bei Andrücken der Rampe 74 an die Rampe 76 erfolgt eine Axialkraftverstärkung auf den Druckring 56, da die Rampen 92, 94 über die Kräfteaufteilung eine weitere Axialkraft 96 erzeugen, die sich zu der an der Schaltmuffe eingeleiteten Axialkraft 78 addiert.

Damit kann bei gleichbleibender Anpreßkraft der Reibeinrichtung 48 (und folglich gleichbleibendem Reibmoment) die Schaltkraft 78 an der Schaltmuffe 46 reduziert werden. Die zusätzliche Axialkraft 92 bleibt auch während des Durchschaltens und im durchgeschalteten Zustand erhalten. Folglich erfolgt auch dann, wenn ein positiver Freiflugweg 91 vorgesehen ist, wie es in Fig. 7 gezeigt ist, während des Durchschaltens eine Belastung der Reibeinrichtung 48. Folglich kann ein Anstieg der Differenzdrehzahl verhindert oder zumindest verringert werden, so daß die Geräuschentwicklung verringert ist.

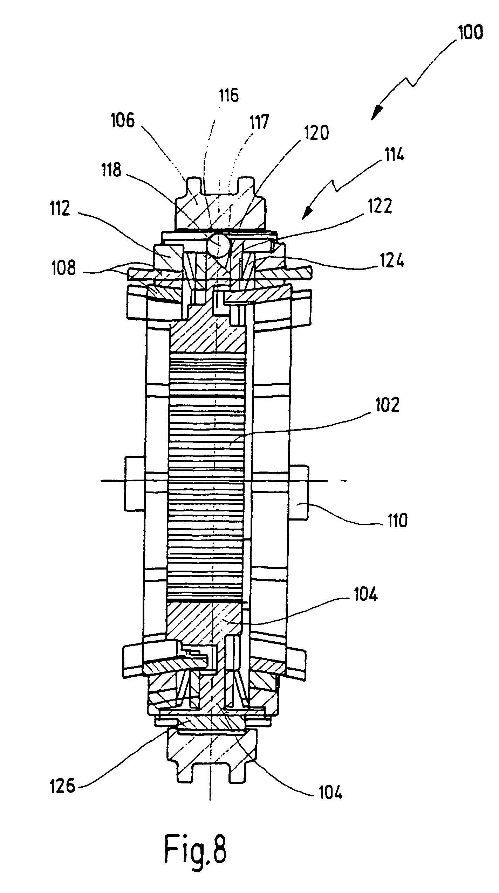

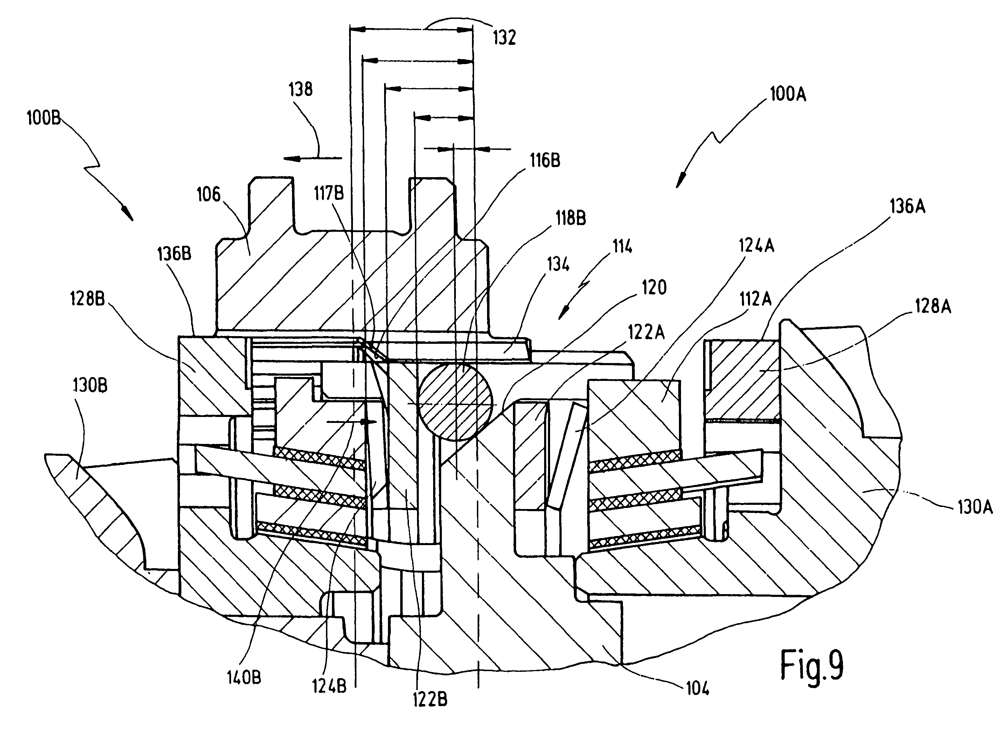

Die Figuren 8 und 9 zeigen eine alternative Ausführungsform einer Schaltkupplung 100 gemäß dem zweiten Aspekt der vorliegenden Erfindung.

Die Schaltkupplung 100 ist, ähnlich der Schaltkupplung 40, Teil einer Schaltkupplungseinheit für einen linker Hand bzw. rechter Hand angeordneten Radsatz. In der Schaltkupplungseinheit enthaltenen Schaltkupplungen 100A bzw. 100B (vgl. Fig. 9) sind symmetrisch aufgebaut. Zur Erleichterung der Darstellung sind in den Figuren 8 und 9 sowohl Elemente der einen Schaltkupplung 100A wie auch der anderen Schaltkupplung 100B bezeichnet, obgleich im folgenden lediglich eine Schaltkupplung 100 beschrieben wird.

An der Welle 102 ist eine Führungsmuffe 104 drehfest und axial unverschieblich gelagert. An der Führungsmuffe 104 ist eine Schaltmuffe 106 drehfest, jedoch axial verschieblich gelagert. Eine Reibeinrichtung 108, bestehend aus einem Kegelpaket ähnlich der Reibeinrichtung 48 ist mittels eines Druckringes 112 belastbar. Einer der Konusringe beinhaltet Nasen 110, die, ähnlich den Nasen 50, formschlüssig mit einem Kupplungskörper 128 verbunden sind, der drehfest und axial unverschieblich an einem Losrad 130 festgelegt ist.

Die Schaltkupplung 100 beinhaltet ferner Umlenkmittel 114 zum Umlenken einer auf die Schaltmuffe 106 aufgebrachten Axialkraft auf den Druckring 112.

Die Umlenkmittel 114 beinhalten eine Rampe 120, die an der Führungsmuffe 104 ausgebildet ist. Oberhalb der Rampe 120 ist ein Wälzkörper, hier eine Rolle 118, angeordnet. Die Schaltmuffe 106 weist radial innenseitig eine Ausnehmung 117 auf, die eine Rampe 116 beinhaltet, die Teil der Umlenkmittel 114 ist.

Die Rolle 118 kontaktiert folglich radial nach innen die Rampe 120 und radial nach außen (im Ruhezustand der Schaltmuffe 106) die Rampe 116.

In axialer Richtung liegt die Rolle 118 an einer Scheibe 122 an, die umfänglich durchgehend ausgebildet ist.

An der gegenüber liegenden Seite der Scheibe 122, also zwischen der Scheibe 122 und dem Druckring 112, ist eine Tellerfeder 124 vorgesehen.

Es versteht sich, daß über den Umfang der Schaltkupplung 100 verteilt eine Mehrzahl derartiger Anordnungen mit Umlenkmitteln für jede der zwei Schaltkupplungen 100A und 100B vorgesehen ist. Beispielsweise können über den Umfang verteilt für jede der Schaltkupplungen 100A, 100B zwei bis vier, bspw. drei Rollen 118 vorgesehen sein. In Fig. 9 erkennt man ferner, daß die Scheibe 122B im Bereich der Rolle 118 in Radialrichtung verlängert ist, um die Übertragung einer Axialkraft von der Rolle 118 auf die Tellerfeder 124 zu ermöglichen.

In einer in Fig. 8 dargestellten Ausgangsposition ist die Tellerfeder 124 weitgehend entspannt. Die Rolle 118 liegt eingegrenzt zwischen den Rampen 116, 120 und der Scheibe 122.

Wenn auf die Schaltmuffe 106 eine Axialkraft 138 ausgeübt wird, drückt die Rampe 116 gegen die Rolle 118 und die eingeleitete Axialkraft wird folglich in radiale Richtung umgelenkt. Die Rolle 118 stützt sich an der Rampe 120 ab und leitet die Kraft wieder in axiale Richtung um, gegen die Scheibe 122. Die Scheibe 122 wird folglich gegen die Tellerfeder 124 angedrückt und die Tellerfeder 124 wiederum drückt über den Druckring 112 auf die Reibeinrichtung 108 und belastet diese. Folglich findet ein Drehzahlangleich zwischen der Welle 102 und dem Losrad 130 statt.

Die während des Drehzahlangleichens angelegte Axialkraft 138 liegt unterhalb eines bestimmten Durchschaltschwellenwertes.

Dieser ist eingerichtet durch die Federrate der Tellerfeder 124 in Verbindung mit der Kraftübersetzung über die Rolle 118.

Sobald die Drehzahlen aneinander angeglichen sind, wird die Axialkraft 138 erhöht, so daß die Schaltmuffe 106 die Rolle 118 überfährt. Dabei wird die Tellerfeder 124 maximal komprimiert. Dieser Zustand wird aufrecht erhalten, bis eine Verzahnung 134 der Schaltmuffe 106 in eine Verzahnung 136 des Kupplungskörpers 128 einfädelt.

Durch die Umlenkmittel 114 wird folglich eine Kraftübersetzung eingerichtet, so daß mit einer vergleichsweise geringen Axialkraft 138 eine hohe Kraft auf die Tellerfeder 124 ausgeübt werden kann.

Im Gegensatz zu der Schaltkupplung 40 ist bei der Schaltkupplung 100 die Reibeinrichtung 108 während der gesamten Durchschaltphase belastet, so daß keine "Freiflugphase" wie bei der Schaltkupplung 40 stattfinden kann. Folglich kann auch beim Durchschalten durchgehend ein hohes Drehmoment übertragen werden.

Es versteht sich, daß über die Kennlinie der Tellerfeder 124 mechanische Bauteiltoleranzen ausgeglichen werden können. Die Kraftübersetzung kann durch Modifikation der Rampen 116, 120 verändert werden. Um beim Durchschalten den Formschluß unter Last zu erleichtern, können die Zähne von Schaltmuffe 106 und Kupplungskörper 128 asymmetrisch angespritzt sein.

Das Reibmoment und die Reibdauer können eingestellt werden über die Axialkraft 138, die eine bestimmte Anpreßkraft ausübt, die Anpreßzeit, die Winkel der Rampen 116, 120 sowie über die Federrate der Tellerfeder 124.

Es versteht sich, daß statt einer Tellerfeder 124 jedes andere Federmedium vorgesehen sein kann, das dazu ausgelegt ist, eine Kraft in axialer Richtung auszuüben.

Für beide Aspekte der vorliegenden Erfindung gilt, daß eine innere Kraftübersetzung die mechanische Belastung der Getriebeschaltungsteile reduziert. Diese können somit leichter gebaut und dimensioniert werden. Bei einer elektromotorischen Betätigung (Aktuatorik 32) sind somit geringere Ströme erforderlich. Auch sind die Bauteile in der Steuervorrichtung 34 kostengünstiger, es ergeben sich geringere EMV-Probleme. Auch der Hilfsenergiebedarf ist durch die kleinere erforderliche Schaltkraft geringer. Die Ansteuerung kann dynamischer ausgelegt werden. Die Elektromotoren können kleiner ausgelegt werden.

## Patentansprüche

1. Formschlüssige sperrverzahnungsfreie Schaltkupplung (30; 40) zum Drehkuppeln von zwei gegeneinander verdrehbaren Elementen (20, 26), die jeweils eine Verzahnung (70, 88) aufweisen, insbesondere zum Kuppeln eines Losrades (26) und einer Welle (20) eines Stufengetriebes (16) für ein Kraftfahrzeug, mit (i) einer zwischen den Elementen wirkenden Reibeinrichtung (48), die bei axialer Belastung dazu dient, die Drehzahlen der Elemente (20, 26) aneinander anzugleichen, mit (ii) einem Schaltglied (46), das zum Drehkuppeln der Elemente (20, 26) axial verschoben wird, dabei die Reibeinrichtung (48) axial belastet und schließlich bei weiterem Verschieben den Formschluß zwischen den Verzahnungen (70, 88) der Elemente (20, 26) bewirkt, und mit (iii) Federmitteln (68), die so wirken, daß das Durchschalten unter Last erst dann möglich ist, wenn eine auf das Schaltglied (46) wirkende axiale Kraft (78) eine bestimmte Durchschaltschwelle überschreitet, wobei die Schaltkupplung (30; 40) sperrverzahnungsfrei ist,
**dadurch gekennzeichnet, dass**
die Federmittel (68) derart angeordnet sind, daß die Federkraft (84) in Umfangsrichtung bzw. tangential wirkt, und daß Umlenkmittel (60) vorgesehen sind, die die axiale Kraft (78) in tangentiale Richtung gegen die Federkraft (84) umlenken, so, daß die tangential wirkende Federkraft (84) die Durchschaltschwelle bildet.

2. Formschlüssige sperrverzahnungsfreie Schaltkupplung (30; 100) zum Drehkuppeln von zwei gegeneinander verdrehbaren Elementen (20,26), die jeweils eine Verzahnung (134, 136) aufweisen, insbesondere zum Kuppeln eines Losrades (26) und einer Welle (20) eines Stufengetriebes (16) für ein Kraftfahrzeug, mit (i) einer zwischen den Elementen (20, 26) wirkenden Reibeinrichtung (108), die bei axialer Belastung dazu dient, die Drehzahlen der Elemente (20, 26) aneinander anzugleichen, mit (ii) einem Schaltglied (106), das zum Drehkuppeln der Elemente (20, 26) axial verschoben wird, dabei die Reibeinrichtung (108) axial belastet und schließlich bei weiterem Verschieben den Formschluß zwischen den Verzahnungen (134, 136) der Elemente (20, 26) bewirkt, und mit (iii) Federmitteln (124), die so wirken, daß ein Durchschalten unter Last erst dann möglich ist, wenn eine auf das Schaltglied wirkende axiale Kraft (138) eine bestimmte Durchschaltschwelle überschreitet,
**dadurch gekennzeichnet, dass**
die Federmittel (124) derart angeordnet sind, daß die Federkraft (140) in axialer Richtung wirkt, und daß Umlenkmittel (114) vorgesehen sind, die die axiale Kraft (138) zunächst in radiale Richtung und anschließend wieder in axiale Richtung gegen die Federkraft (140) umlenken, so daß die Federkraft (140) die Durchschaltschwelle bildet.

3. Schaltkupplung nach Anspruch 1 oder 2, **dadurch gekennzeichnet, daß** die Umlenkmittel (60; 114) wenigstens eine Rampe (74, 76; 116, 120) aufweisen.

4. Schaltkupplung nach Anspruch 1 oder 3, **dadurch gekennzeichnet, daß** das Schaltglied (46) wenigstens einen Blockzahn (72) aufweist, der an seiner axialen, in Durchschaltrichtung weisenden Stirnseite eine Rampe (74) aufweist, die mit einem in Umfangsrichtung beweglichen Sperrelement (64) zusammenwirkt.

5. Schaltkupplung nach Anspruch 4, **dadurch gekennzeichnet, daß** das Sperrelement (64) in axialer Richtung beweglich ist und dazu dient, die Reibeinrichtung (48) axial zu belasten.

6. Schaltkupplung nach Anspruch 5, **dadurch gekennzeichnet, daß** zwischen dem Sperrelement (64) und der Reibeinrichtung (48) ein umfänglich durchgehender Druckring (56) vorgesehen ist.

7. Schaltkupplung nach einem der Ansprüche 4 bis 6, **dadurch gekennzeichnet, daß** das Sperrelement (64) eine Rampe (76) aufweist, die mit der Rampe (74) des Blockzahnes (72) zusammenwirkt.

8. Schaltkupplung nach einem der Ansprüche 4 bis 7, **dadurch gekennzeichnet, daß** das Sperrelement (64) bei axialer Belastung seiner Rampe (76) die Federmittel (68) in Umfangsrichtung elastisch komprimiert.

9. Schaltkupplung nach einem der Ansprüche 1 oder 3 - 8, **dadurch gekennzeichnet, daß** die Federmittel (68) einen in Umfangsrichtung beweglichen Federstein (66) gegen einen Anschlag (86) elastisch vorspannen.

10. Schaltkupplung nach Anspruch 5 und 9, **dadurch gekennzeichnet, daß** die Anlagefläche zwischen dem Sperrelement (64') und dem Federstein (66') schräg zur Umfangsrichtung ausgerichtet ist, so daß dem Sperrelement (64') mittels des Federsteins (66') eine Axialkraft (96) erteilt wird, um die axiale Belastung der Reibeinrichtung (48) zu verstärken.

11. Schaltkupplung nach Anspruch 2 oder 3, **dadurch gekennzeichnet, daß** die Umlenkmittel (114) einen Wälzkörper (118) aufweisen, der zwischen dem Schaltglied (106), einer axial unbeweglichen Rampe (120) und den Federmitteln (124) angeordnet ist.

12. Schaltkupplung nach Anspruch 11, **dadurch gekennzeichnet, daß** zwischen dem Wälzkörper (118) und den Federmitteln (124) eine in Umfangsrichtung durchgehende Scheibe (122) angeordnet ist.

13. Schaltkupplung nach Anspruch 11 oder 12, **dadurch gekennzeichnet, daß** das Schaltglied (106) eine Ausnehmung (117) aufweist, in die der Wälzkörper (118) im axial nicht durchgeschalteten Zustand des Schaltgliedes (106) greift.

14. Schaltkupplung nach Anspruch 13, **dadurch gekennzeichnet, daß** die Ausnehmung (117) des Schaltgliedes (106) eine Rampe (116) aufweist.

15. Schaltkupplung nach einem der Ansprüche 1 bis 14, **dadurch gekennzeichnet, daß** die Umlenkmittel (60; 114) eine Kraftübersetzung einrichten, so daß eine kleine axiale Kraft (78; 138) auf das Schaltglied (46; 106) eine hohe axiale Belastung der Reibeinrichtung (48; 108) bewirkt.

16. Schaltkupplung nach einem der Ansprüche 1 bis 15, **dadurch gekennzeichnet, daß** die Schaltkupplung (30; 40; 100) dazu ausgelegt ist, bei einem axialen Verschieben des Schaltgliedes (46;106) ein an einem der Elemente anstehendes Drehmoment auf das andere so lange zu übertragen, bis der Formschluß erreicht ist.

17. Schaltkupplung nach einem der Ansprüche 1 bis 16, **dadurch gekennzeichnet, daß** die Verzahnungen (70, 88; 134, 136) der Elemente (20, 26) dazu ausgelegt sind, ein Einfädeln unter Teillast zu erleichtern.

18. Schaltkupplung nach einem der Ansprüche 1 bis 15, **dadurch gekennzeichnet, daß** die Schaltkupplung (30; 40) dazu ausgelegt ist, bei einem axialen Verschieben des Schaltgliedes (46) ein an einem der Elemente anstehendes Drehmoment auf das andere zu übertragen, bis annähernd der Formschluß erreicht ist, so daß der Formschluß im Freiflug erreicht wird.

19. Automatisierter Antriebsstrang (10) mit einem Motor (12), einer mit dem Ausgang des Motors (12) verbundenen Anfahr- und Trennkupplung (14), einem mit dem Ausgang der Trennkupplung (14) verbundenen formschlüssigen Stufengetriebe (16) und einer Steuervorrichtung (34), wobei das Stufengetriebe (16) eine Mehrzahl von Radsätzen (12) entsprechend einer Mehrzahl von Gängen aufweist, die unter Steuerung der Steuervorrichtung (34) mittels jeweiliger Schaltkupplungen (30; 40; 100) ein- und auslegbar sind, wobei wenigstens ein Gangwechsel von einem Startgang zu einem Zielgang mittels einer teillastschaltfähigen Schaltkupplung (30; 40; 100) für den Zielgang erfolgt, die bei wenigstens teilweise geschlossener Trennkupplung (14) während des Gangwechsels ein Drehmoment zum Ausgang des Stufengetriebes (16) überträgt,
**dadurch gekennzeichnet, daß** die teillastschaltfähige Schaltkupplung eine Schaltkupplung (10; 30; 100) nach einem der Ansprüche 1 bis 18 ist.

## Claims

1. Positive shift clutch (30; 40) free of blocking toothing, for the rotational coupling of two elements (20, 26) which are rotatable relative to one another and each have a toothing (70, 88), in particular for the coupling of a loose wheel (26) and a shaft (20) of a multi-step transmission (16) for a motor vehicle, with (i) a friction device (48) which acts between the elements and, in the event of axial load, serves for adapting the rotational speeds of the elements (20, 26) to one another, with (ii) a shift member (46) which, for the rotational coupling of the elements (20, 26), is displaced axially, in this case loads the friction device (48) axially and, finally, in the event of further displacement, brings about the positive connection between the toothings (70, 88) of the elements (20, 26), and with (iii) spring means (68) which act in such a way that shift-through under load is possible only when an axial force (78) acting on the shift member (46) overshoots a defined shift-through threshold, the shift clutch (30, 40) being free of blocking toothing,
**characterized in that**
the spring means (68) are arranged in such a way that the spring force (84) acts in a circumferential direction or tangentially, and **in that** deflection means (60) are provided, which deflect the axial force (78) into a tangential direction counter to the spring force (84), so that the tangentially acting spring force (84) forms the shift-through threshold.

2. Positive shift clutch (30; 100) free of blocking toothing, for the rotational coupling of two elements (20, 26) which are rotatable relative to one another and each have a toothing (134, 136), in particular for the coupling of a loose wheel (26) and a shaft (20) of a multi-step transmission (16) for a motor vehicle, with (i) a friction device (108) which acts between the elements (20, 26) and, in the event of axial load, serves for adapting the rotational speed of the elements (20, 26) to one another, with (ii) a shift member (106) which, for the rotational coupling of the elements (20, 26), is displaced axially, in this case loads the friction device (108) axially and, finally, in the event of further displacement, brings about the positive connection between the toothings (134, 136) of the elements (20, 26), and with (iii) spring means (124) which act in such a way that shift-through under load is possible only when an axial force (138) acting on the shift member overshoots a defined shift-through threshold,
**characterized in that**
the spring means (124) are arranged in such a way that the spring force (140) acts in the axial direction, and **in that** deflection means (114) are provided, which deflect the axial force (138) first into the radial direction and subsequently into the axial direction again, counter to the spring force (140), so that the spring force (140) forms the shift-through threshold.

3. Shift clutch according to Claim 1 or 2, **characterized in that** the deflection means (60; 114) have at least one ramp (74, 76; 116, 120).

4. Shift clutch according to Claim 1 or 3, **characterized in that** the shift member (46) has at least one blocking tooth (72) which, on its axial end face pointing in the shift-through direction, has a ramp (74) which cooperates with a blocking element (64) movable in the circumferential direction.

5. Shift clutch according to Claim 4, **characterized in that** the blocking element (64) is movable in the axial direction and serves for loading the friction device (48) axially.

6. Shift clutch according to Claim 5, **characterized in that** a circumferentially continuous thrust ring (56) is provided between the blocking element (64) and the friction device (48).

7. Shift clutch according to one of Claims 4 to 6, **characterized in that** the blocking element (64) has a ramp (76) which cooperates with the ramp (74) of the blocking tooth (72).

8. Shift clutch according to one of Claims 4 to 7, **characterized in that** the blocking element (64), in the event of axial load on its ramp (76), compresses the spring means (68) elastically in the circumferential direction.

9. Shift clutch according to one of Claims 1 or 3 - 8, **characterized in that** the spring means (68) elastically prestress a circumferentially movable spring block (66) against an abutment (86).

10. Shift clutch according to Claims 5 and 9, **characterized in that** the bearing surface between the blocking element (64') and the spring block (66') is oriented obliquely to the circumferential direction, so that an axial force (96) is imparted to the blocking element (64') by means of the spring block (66'), in order to reinforce the axial load on the friction device (48).

11. Shift clutch according to Claim 2 or 3, **characterized in that** the deflection means (114) have a rolling body (118) which is arranged between the shift member (106), an axially immovable ramp (120) and the spring means (124).

12. Shift clutch according to Claim 11, **characterized in that** a circumferentially continuous disc (122) is arranged between the rolling body (118) and the spring means (124).

13. Shift clutch according to Claim 11 or 12, **characterized in that** the shift member (106) has a recess (117), into which the rolling body (118) engages in the state in which the shift member (106) is not shifted through axially.

14. Shift clutch according to Claim 13, **characterized in that** the recess (117) of the shift member (106) has a ramp (116).

15. Shift clutch according to one of Claims 1 to 14, **characterized in that** the deflection means (60, 114) set up a force step-up, so that a low axial force (78; 138) on the shift member (46; 106) causes a high axial load on the friction device (48; 108).

16. Shift clutch according to one of Claims 1 to 15, **characterized in that** the shift clutch (30; 40; 100) is designed, in the event of an axial displacement of the shift member (46; 106), to transmit a torque occurring at one of the elements to the other until the positive connection is achieved.

17. Shift clutch according to one of Claims 1 to 16, **characterized in that** the toothings (70, 88; 134, 136) of the elements (20, 26) are designed to make it easier to slip in under partial load.

18. Shift clutch according to one of Claims 1 to 15, **characterized in that** the shift clutch (30; 40) is designed, in the event of an axial displacement of the shift member (46), to transmit a torque occurring at one of the elements to the other until the positive connection is approximately achieved, so that the positive connection is achieved in free movement.

19. Automated drive train (10), with an engine (12), with a starting and separating clutch (14) connected to the output of the engine (12), with a positive multi-step transmission (16) connected to the output of the separating clutch (14), and with a control device (34), the multi-step transmission (16) having a plurality of wheel sets (12) corresponding to a plurality of gears which can be selected and deselected under the control of the control device (34) by means of respective shift clutches (30; 40; 100), at least one gear change from a starting gear to a target gear taking place by means of a partial-load-shiftable shift clutch (30; 40; 100) for the target gear, which, in the case of an at least partially closed separating clutch (14) during the gear change, transmits a torque to the output of the multi-step transmission (16),
**characterized in that** the partial-load-shiftable shift clutch is a shift clutch (10; 30; 100) according to one of Claims 1 to 18.

## Revendications

1. Embrayage (30 ; 40) par complémentarité de formes et sans denture à cliquet pour l'accouplement en rotation de deux éléments (20, 26) pouvant tourner l'un par rapport à l'autre, qui comportent chacun une denture (70, 88), en particulier pour l'accouplement d'une roue libre (26) et d'un arbre (20) d'une transmission à engrenages (16) d'un véhicule automobile, comportant (i) un dispositif à friction (48) agissant entre les éléments et qui sert, sous charge axiale, à équilibrer les vitesses de rotation des éléments (20, 26), comportant (ii) un organe de commutation (46) qui est déplacé axialement pour l'accouplement en rotation des éléments (20, 26), sollicite ce faisant axialement le dispositif à friction (48) et finalement provoque, lors de la poursuite du déplacement, la liaison par complémentarité de formes entre les dentures (70, 88) des éléments (20, 26), et comportant (iii) des moyens à ressort (68) qui agissent de manière que l'accouplement sous charge ne soit possible que si une force axiale (78), agissant sur l'organe de commutation (46), dépasse un seuil d'accouplement déterminé, l'embrayage (30 ; 40) ne comportant pas de denture à cliquet,
**caractérisé en ce que**
les moyens à ressort (68) sont disposés de façon que la force de ressort (84) agisse dans la direction périphérique ou tangentiellement, et **en ce que** sont prévus des moyens de renvoi (60) qui dévient la force axiale (78) dans la direction tangentielle à l'encontre de la force de ressort (84), de façon que la force de ressort (84) agissant tangentiellement forme le seuil d'accouplement.

2. Embrayage (30 ; 100) par complémentarité de formes et sans denture à cliquet pour l'accouplement en rotation de deux éléments (20, 26) pouvant tourner l'un par rapport à l'autre, qui comportent chacun une denture (134, 136), en particulier pour l'accouplement d'une roue libre (26) et d'un arbre (20) d'une transmission à engrenages (16) d'un véhicule automobile, comportant (i) un dispositif à friction (108) agissant entre les éléments et qui sert, sous charge axiale, à équilibrer les vitesses de rotation des éléments (20, 26), comportant (ii) un organe de commutation (106) qui est déplacé axialement pour l'accouplement en rotation des éléments (20, 26), sollicite ce faisant axialement le dispositif à friction (108) et finalement provoque, lors de la poursuite du déplacement, la liaison par complémentarité de formes entre les dentures (134, 136) des éléments (20, 26), et comportant (iii) des moyens à ressort (124) qui agissent de manière que l'accouplement sous charge ne soit possible que si une force axiale (138), agissant sur l'organe de commutation (46), dépasse un seuil d'accouplemet déterminé,
**caractérisé en ce que**
les moyens à ressort (124) sont disposés de manière que la force de ressort (140) agisse dans la direction axiale, et **en ce que** sont prévus des moyens de renvoi (114) qui dévient la force axiale (138) d'abord dans la direction radiale puis à nouveau dans la direction axiale, à l'encontre de la force de ressort (140), de manière que la force de ressort (140) forme le seuil d'accouplement.

3. Embrayage selon la revendication 1 ou 2, **caractérisé en ce que** les moyens de renvoi (60 ; 114) comportent au moins une rampe (74, 76 ; 116, 120).

4. Embrayage selon la revendication 1 ou 3, **caractérisé en ce que** l'organe de commutation (46) comporte au moins une dent de blocage (72) qui présente, sur son côté frontal axial dirigé dans le sens d'accouplement, une rampe (74) qui coopère avec un élément de blocage (64) mobile dans la direction périphérique.

5. Embrayage selon la revendication 4, **caractérisé en ce que** l'élément de blocage (64) est mobile dans la direction axiale et sert à charger axialement le dispositif à friction (8).

6. Embrayage selon la revendication 5, **caractérisé en ce qu'**il est prévu une bague de pression (56) continue périphériquement, entre l'élément de blocage (64) et le dispositif à friction (48).

7. Embrayage selon l'une des revendications 4 à 6, **caractérisé en ce que** l'élément de blocage (64) comporte une rampe (76) qui coopère avec la rampe (74) de la dent de blocage (72).

8. Embrayage selon l'une des revendications 4 à 7, **caractérisé en ce que** l'élément de blocage (64) comprime élastiquement les moyens à ressort (68) dans la direction périphérique, lorsque sa rampe (76) est chargée axialement.

9. Embrayage selon l'une des revendications 1 ou 3 à 8, **caractérisé en ce que** les moyens à ressort (68) précontraignent élastiquement contre une butée, une pièce élastique (66) mobile dans la direction périphérique.

10. Embrayage selon les revendications 5 et 9, **caractérisé en ce que** la surface de contact entre l'élément de blocage (64') et la pièce élastique (66') est orientée obliquement par rapport à la direction périphérique, ce qui fait qu'une force axiale (96) est imprimée à l'élément de blocage (64') au moyen de la pièce élastique (66'), afin de renforcer la charge axiale du dispositif à friction (48).

11. Embrayage selon la revendication 2 ou 3, **caractérisé en ce que** les moyens de renvoi (114) comportent un corps de roulement (118) qui est disposé entre l'organe de commutation (106), une rampe (120) non mobile axialement et les moyens à ressort (124).

12. Embrayage selon la revendication 11, **caractérisé en ce qu'**un disque (122), continu dans la direction périphérique, est disposé entre le corps de roulement (118) et les moyens à ressort (124).

13. Embrayage selon la revendication 11 ou 12, **caractérisé en ce que** l'organe de commutation (106) présente un évidement (117) dans lequel le corps de roulement (118) s'engage à l'état axialement non accouplé de l'organe de commutation (106).

14. Embrayage selon la revendication 13, **caractérisé en ce que** l'évidement (117) de l'organe de commutation (106) présente une rampe (116).

15. Embrayage selon l'une des revendications 1 à 14, **caractérisé en ce que** les moyens de renvoi (60 ; 114) réalisent une multiplication des forces, ce qui fait qu'une petite force axiale (78 ; 138) exercée sur l'organe de commutation (46 ; 106), provoque une charge axiale élevée sur le dispositif à friction (48 ; 108).

16. Embrayage selon l'une des revendications 1 à 15, **caractérisé en ce que** l'embrayage (30 ; 40 ; 100) est dimensionné de manière qu'en cas de coulissement axial de l'organe de commutation (46 ; 106), un couple de rotation, s'exerçant sur l'un des éléments, est transmis à l'autre jusqu'à ce que la liaison par complémentarité de formes soit obtenue.

17. Embrayage selon l'une des revendications 1 à 16, **caractérisé en ce que** les dentures (70, 88 ; 134, 136) des éléments (20, 26) sont dimensionnées de manière à faciliter un enfilement sous charge partielle.

18. Embrayage selon l'une des revendications 1 à 15, **caractérisé en ce que** l'embrayage (30 ; 40) est dimensionné de manière qu'en cas de coulissement axial de l'organe de commutation (46), un couple de rotation s'exerçant sur l'un des éléments est transmis à l'autre élément, jusqu'à ce que la liaison par complémentarité de formes soit presque atteinte, de sorte que la liaison par complémentarité de formes est atteinte en vol libre.

19. Ligne d'entraînement automatisée (10) comportant un moteur (12), un accouplement de démarrage et accouplement de séparation (14) reliés à la sortie du moteur (12), une transmission par engrenages (16) par complémentarité de formes, reliée à la sortie de l'accouplement de séparation (14) ainsi qu'un dispositif de commande (34), la transmission à engrenages (16) comportant une pluralité de jeux de roues (12) correspondant à une pluralité de rapports qui, avec la commande du dispositif de commande (34), peuvent être engagés et dégagés au moyen d'embrayages (30 ; 40 ; 100) respectifs, au moins un changement de rapport, d'un rapport de départ à un rapport d'arrivée s'effectuant au moyen d'un embrayage (30 ; 40 ; 100) susceptible d'une commutation sous charge partielle pour le rapport d'arrivée, lequel embrayage transmet, lorsque l'accouplement de séparation (14) est au moins en partie fermé, et pendant le changement de rapport, un couple de rotation vers la sortie de la transmission à engrenages (16), **caractérisée en ce que** l'embrayage susceptible de commuter sous charge partielle est un embrayage (10; 30; 100) selon l'une des revendications 1 à 18.
